# EUROPEAN PATENT APPLICATION

(11) **EP 4 260 926 A1**
(43) Date of publication of application: **18.10.2023**
(21) Application number: 23167364.1
(22) Date of filing: 11.04.2023
(51) Int. Cl.: B01D 21/00, B01D 21/24, B01D 21/26, B01D 36/04, C02F 1/00, C02F 1/52, C02F 3/08, B04C 1/00

(54) **LIQUID PROCESSING DEVICE**

(30) Priority: 11.04.2022 FI 20225313
(71) Applicant: BK-Hydrometa Oy, 63700 Ähtäri (FI)
(72) Inventor: Kuoppala, Asko, 27840 Köyliö (FI)
(74) Representative: Kolster Oy Ab

(57) **Abstract**

This invention relates to a liquid processing device comprising a first clarification chamber (1) and an inlet (2) for liquid to be processed. In order to purify the liquid to be processed without the use of chemicals, the liquid processing device further comprises an inlet chamber (3) comprising a conical part (4) that tapers downwards and has discontinuity locations comprised on its inner surface. The liquid processing device also comprises a sludge chamber (6) arranged below the inlet chamber (3) for receiving matter that is gravitationally separated in the inlet chamber (3), and a flow connection (7) to the first clarification chamber (1) arranged to an upper part of the inlet chamber (3). Thereby, the inlet (2) is directed towards the discontinuity locations of the inner surface of the conical part (4) to feed the liquid to be processed with pressure against the discontinuity locations of the inner surface to produce a vortex of liquid in the conical part (4).

## Description

### BACKGROUND OF THE INVENTION

### FIELD OF THE INVENTION

This invention relates to a liquid processing device for purifying liquid without the use of chemicals.

### DESCRIPTION OF PRIOR ART

In relation to industrial liquid processing, such as processing of waste waters of extractive- and fertilizer industries, it is typically necessary to treat liquids containing both solid matter and dissolved impurities. In such cases, the aim of the liquid processing is typically purification of the liquid from both solid matter and dissolved impurities, whereby removal of both types of impurities from the liquid is known to require processing of the liquid through various separate processing steps. Especially the solid matter comprised in the liquid to be processed, when reaching the later processing steps, often provides challenges to the continuity of the processing, for example due to clogging of the equipment caused by the particulates. Due to this, effective removal of the solid matter at a dedicated processing step is crucial for purification of the liquid.

Removal of solid matter in the liquid processing is known to be carried out by mechanical sieving, chemical sedimentation or by filtration. Separation of fine matter is possible to carry out, for example, based on different descension rates of the particulates in settling basins. In these known solutions, however, a challenge is typically formed by the need for use of chemicals, the time required by the sedimentation process, size of the existing equipment or clogging problems associated with the filtration.

### SUMMARY OF THE INVENTION

An object of the present invention is to solve the above-mentioned drawbacks and to provide a device and a method for efficient liquid purification without the use of chemicals. This object is achieved with a liquid processing device according to independent claim 1 and a method according to independent claim 15.

By utilizing an inlet chamber provided with discontinuity locations to produce a vortex of liquid and to separate matter from the liquid to be processed in the liquid processing device, it is possible to separate impurities from the liquid efficiently through a continuous process so as to achieve liquid suited for later processing steps.

### BRIEF DESCRIPTION OF DRAWINGS

In the following the present invention will be described in closer detail by way of example and with reference to the attached drawings, in which
Figure 1 illustrates cross-cut section of a liquid processing device as seen directly from the side, and
Figure 2 illustrates an inlet chamber of the liquid processing device of Figure 1 as seen directly from the above.

### DESCRIPTION OF AT LEAST ONE EMBODIMENT

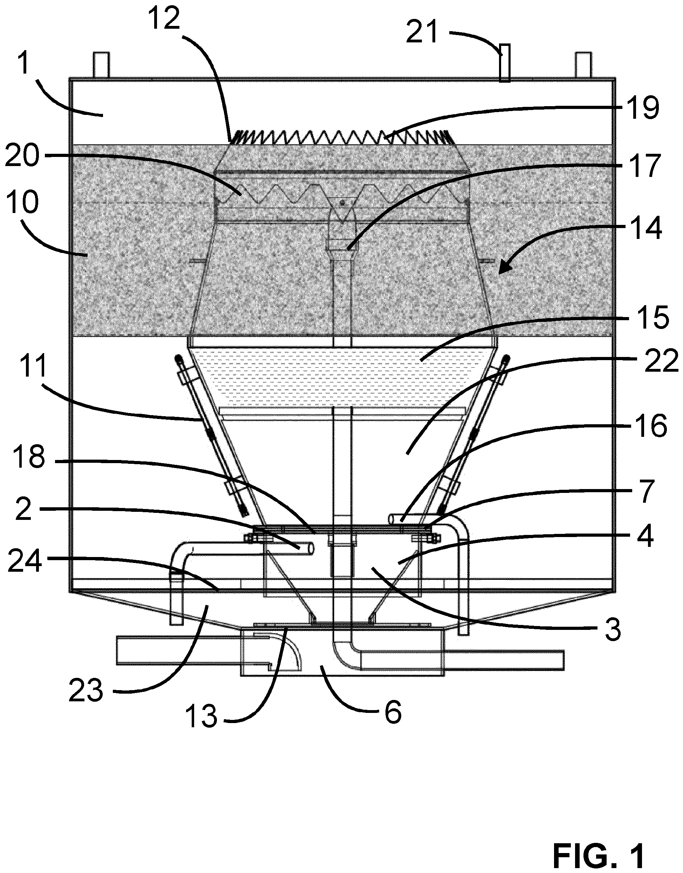

In the example of Figure 1, a cross-section according to a vertical middle plane of a liquid processing device is shown, as viewed directly from the side. As seen in said example, the liquid processing device comprises a first clarification chamber 1, an inlet 2 for the liquid to be processed, and an inlet chamber 3. The liquid processing device according to the example further comprises a sludge chamber 6 arranged below the inlet chamber 3 for receiving matter that is gravitationally separated in the inlet chamber 3, such as particulates of solid matter, and a flow connection 7 to the first clarification chamber 1 arranged to an upper part of the inlet chamber 3. Thereby, the inlet chamber 3 and the sludge chamber 6 are mutually arranged such that the matter that is gravitationally separated in the inlet chamber 3 is transferred to the sludge chamber 6 by gravity, for example through an opening between the inlet chamber 3 and the sludge chamber 6. The composition and structure of said separated matter are determined according to the type of liquid being processed in the liquid processing device at any given time, wherein they may comprise, for example, in relation to treatment of waste waters from the fertilizer industry, nitrogen-containing solid particulates.

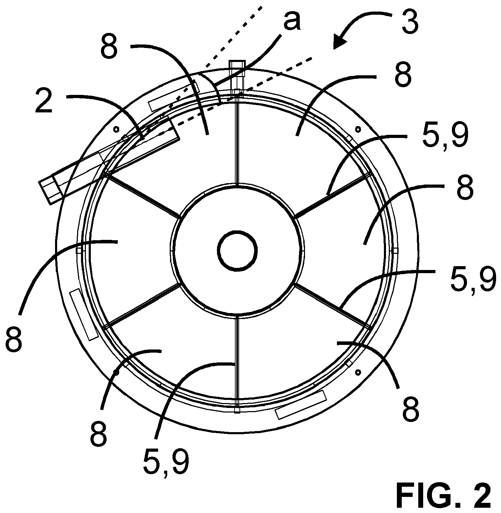

In the example of Figure 2, in turn, the inlet chamber 3 of the liquid processing device of Figure 1 is shown as depicted directly from above. As shown in the example of Figures 1 and 2, the inlet chamber 3 comprises a downwardly tapering conical part 4, the inner surface of which comprises discontinuity locations 5. In said example, these discontinuity locations are produced as corners 9 formed by walls 8 of the conical part of the inlet chamber, whereby said corners are formed at the junctions of the walls 8. In the liquid processing device according to said example, the inlet 2 is directed towards the discontinuity locations 5 of the inner surface of the conical part 4 to feed the liquid to be processed with pressure against said discontinuity locations 5. With the arrangement according to said example, the liquid to be processed is guided along the walls 8 of the conical part to produce a vortex of liquid in the conical part 4. The pressurized feed of the liquid to be processed as described also creates pressure shocks between the liquid to be processed and the walls 8 of the conical part, which results in coalescence of the solid particulates comprised in the liquid and, as a result, an increase in the particle size through mechanical flocculation. In said example, inlet 2 is arranged to feed the liquid to be processed with a pressure of 2 to 3 bar, which may be produced, for example, by means of a pump system external to the liquid processing device. Said pump system may thereby be included, for example, in a water treatment plant to which the liquid processing device is connected. However, in other embodiments of the liquid processing device, this pressure may also be higher or lower than that presented in said example, whereby the magnitude of the pressure is defined, for example, by the capacity of the equipment used to generate it.

In the liquid processing device of the example of figures 1 and 2, the conical shape of the conical part 4 of the inlet chamber enables an upwardly orientation of the liquid vortex created in it along the walls 8 of the conical part. Thereby, in said arrangement the solid particulates contained in the liquid to be processed are brought into motion in the vicinity of the walls 8 and along them, such that as the vortex of liquid progresses inside the conical part 4, some of the particulates are made to lag behind the movement of the liquid flow and to sink downwards towards the lower part of the inlet chamber 3 due to gravity. This gravitational separation of the solid particulates is further enhanced by the pressurized supply of the liquid to be processed, whereby the pressure created by the liquid entering the inlet chamber 3 can prevent the separated solid particulates from rising upwards with the flow of the liquid. The inner surface of the conical part 4 can additionally comprise various shapes for slowing down or stopping the movement of solid particulates, such as protrusions or edges, for further enhancing the separation of the solid particulates. In addition, the increase in the particle size of the solid matter caused by the pressure shocks occurring between the liquid to be processed and the walls 8 of the conical part enables an increase in the number of large-sized particles that are separated in the gravitational separation, and thus further enhancement of the purification treatment of the liquid in the inlet chamber 3.

In the example of Figures 1 and 2, the inside of the conical part 4 of the inlet chamber is formed into the shape of a regular hexagon of its cross-section, whereby the walls 8 form 6 identical corners 9 with each other. In other embodiments of the liquid processing device, the shape of the inlet chamber 3 and the number of corners 9 may, however, differ from said example, whereby the number of the corners is favorably set between 5 and 8. In said example, the inlet 2, in turn, is arranged to feed the liquid to be processed against the discontinuity locations 5 of the inner surface of the conical part 4 at an incoming angle (a) of 25° to 30°. In this context, the incoming angle (a) refers to the angle between the flow direction of the liquid to be processed arriving from the inlet 2 and the wall of the inlet chamber 3 at the junction of the inlet 2 and the inlet chamber 3 inside the inlet chamber 3. However, the size of the inlet angle (a) may differ from said example in in other embodiments of the liquid processing device, whereby the size of the angle is favorably set between 15° and 60°. By the arrangement of the corners 9 of the conical part and the incoming angle (a) according to said example, effective separation of solid particulates from the liquid to be processed is achieved, and thus separated liquid is obtained with the inlet chamber 3, which has a composition suitable for the following liquid processing steps.

In the example of Figure 1, the inlet chamber 3 is arranged to a second clarification chamber 14 inside the first clarification chamber 1. The first clarification chamber 1 thus forms a closed outermost part of the liquid processing device in said example, inside of which the liquid processing takes place. The inlet chamber 3 is further arranged to a lower part of the second clarification chamber 14 and coaxially with respect to it, whereby the inlet chamber 3 is separated from the inner part of the second clarification chamber 14 by a liquid-tight partitioning wall 18. The steps of the liquid processing are arranged to be carried out in said first 1 and the second clarification chamber 14 such that the liquid exiting the inlet chamber 3 travels from the first clarification chamber 1 after the liquid processing steps carried out in it to the interior of the second clarification chamber 14 for the subsequent liquid processing steps. Furthermore, in said example, the flow connection 7 from the inlet chamber 3 to the first clarification chamber 1 opens to a lower part of the first clarification chamber 1, such that the separated liquid that has undergone the gravitational separation of matter in the inlet chamber 3 is guided to the lower part of the first clarification chamber 1 via said flow connection 7.

In the example of Figure 1, a nozzle apparatus 11 is arranged to the first clarification chamber 1 to feed liquid to the first clarification chamber 1. Thereby, the liquid fed by the nozzle apparatus 11 is arranged to mix in the first clarification chamber 1 with the separated liquid arriving from the inlet chamber 3 through the flow connection 7. In said example, the nozzle apparatus 11 is arranged to feed liquid to the first clarification chamber 1 from a clean chamber 22 arranged inside the second clarification chamber 14, whereby the liquid to be fed is liquid that has already been processed in the liquid processing device. Said arrangement enables the advantage that no separate liquid supply to the liquid purification device is needed for providing the liquid fed by the nozzle apparatus 11. When the liquid fed by the nozzle apparatus 11 is also liquid already processed in the liquid processing device, the supplied liquid is furthermore well suited for combining with the liquid to be processed arriving from the inlet chamber 3, without, for example, a significant increase in the load of the separable matter in the first clarification chamber 1.

In the example of Figure 1, also carrier material 10 is arranged in the first clarification chamber 1. Thereby, in the liquid processing device according to the example, the nozzle apparatus 11 causes a spinning motion in the liquid and the carrier material 10 inside the first clarification chamber 1, so as to bring them into contact with each other. In the liquid processing device according to the example, the carrier material 10 may comprise granules, pellets or plastic bodies, whereby the carrier material consists of numerous separate pieces that are surrounded by the liquid in the first clarification chamber 1 brought into contact with the carrier material 10. The structure of the carrier material 10 is thereby also selected in such a way that the pieces of the carrier material settle, through being supported by the liquid surrounding them, to the upper part of the first clarification chamber 1, for example due to their lower density as compared to the liquid. Thereby, the spinning motion of the liquid in the first clarification chamber 1 caused by the nozzle apparatus 11 is arranged to be directed also upwards, so as to bring the separated liquid arriving from the inlet chamber 3 to the lower part of the first clarification chamber 1 into contact with the carrier material 10 in the upper part of the first clarification chamber 1. During the above-mentioned upward spinning motion, matter still contained in the liquid, such as solid particulates, may gravitationally separate from the liquid being processed, which then sink to the lower part of the first clarification chamber 1.

In the liquid processing device of the example in Figure 1, a biofilm is arranged to the surface of the carrier material 10, which can consist of, for example, microbial growth. The composition and properties of said biofilm may be selected according to the properties of the liquid to be processed in the liquid processing device, whereby, for example, microbes binding the matter contained in the liquid to be processed may be selected as the microbial growth forming the biofilm. Said matter binding to the biofilm may thereby comprise both matter dissolved in the liquid to be processed and solid particulates. In the liquid processing device according to the example of Figure 1, the matter bound to the biofilm causes a gradual increase of the mass of the biofilm on the surface of the carrier material 10, whereby the growth of the mass above a critical point on the surface of each carrier material piece causes the carrier material piece to sink towards the lower part of the first clarification chamber 1. Thereby, the sinking carrier material 10 simultaneously ends up into contact with the liquid flow provided by the nozzle apparatus 11, such that a rinsing effect on the sinking carrier material 10 may be produced by the liquid flow. With said rinsing, excess biofilm is removed from the surface of the sinking carrier material pieces, whereby the detached biofilm remains in the lower part of the first clarification chamber 1 and the carrier material 10 released from the excess biofilm returns towards the upper part of the first clarification chamber 1 to repeat the cycle as described. Thus, matter contained in the liquid circulating in the first clarification chamber 1 is removed from the liquid along with the detached biofilm, whereby by bringing the liquid into contact with the carrier material 10, pre-purified liquid is obtained.

In the example of Figure 1, the lower part of the first clarification chamber 1 comprises a downwardly tapering conical section 23, which is separated from the rest of the first clarification chamber 1 by a separator grate 24 so as to prevent the carrier material 10 from entering the conical section 23. An outlet 13 to the sludge chamber 6 is also provided to the lower part of the first clarification chamber 1 for removing material accumulating to the lower part of the first clarification chamber 1. In the example of Figure 1, said outlet 13 comprises an opening between the conical section 23 and the sludge chamber 6, through which the material accumulating to the lower part of the first clarification chamber 1 can transfer gravitationally guided by the walls of the conical section 23 into the sludge chamber 6. However, in other embodiments of the liquid processing device, the outlet 13 can also be implemented, for example, as a mechanical removal means of the material from the lower part of the first clarification chamber 1.

In the liquid processing device of the example of Figure 1, the upper part of the first clarification chamber 1 is provided with an outlet 12 for removing liquid from the first clarification chamber 1. In said example, the outlet 12 is arranged to remove the liquid, which comprises the pre-purified liquid brought into contact with the carrier material 10, to the second clarification chamber 14, whereby the transfer of the liquid takes place as overflow over an upper edge of the second clarification chamber 14, the second clarification being 14 open from its upper part to the first clarification chamber 1. Thereby, the upper surface of the liquid and the carrier material 10 supported by the liquid in the first clarification chamber 1 settles to the level of the upper edge of the second clarification chamber 14, so that the liquid entering from the inlet chamber 3 to the lower part of the first clarification chamber 1 and the liquid fed by the nozzle apparatus 11 cause a corresponding amount of liquid to be passed through the outlet 12 to the second clarification chamber 14 at the upper part of the first clarification chamber 1. In said example, the upper part of the second clarification chamber 14 is furthermore provided with separator members 19 for separating the carrier material 10 from the pre-cleaned liquid passing through the outlet 12, wherein the separator members 19 comprise a separator grid extending along the upper edge of the second clarification chamber 14. Thereby, gaps in the separator grid are dimensioned so as to allow the liquid to pass through the gaps but to prevent the passage of the carrier material pieces.

Furthermore, in the example of Figure 1, the side walls of the first clarification chamber 1 are formed into a cylindrical shape from their inner side, and the side walls of the second clarification chamber 14 are formed at their lower portion from the outside into a cone tapering downwards. Thereby, the spinning motion of the liquid in the first clarification chamber 1 is arranged to advance upwards through a decreasing area, such that as the liquid flow is directed upwards towards the upper part of the first clarification chamber 1, the velocity of the liquid flow simultaneously increases. Thereby, as the rotational movement of the liquid accelerates and the liquid moves towards the upper part of the first clarification chamber 1, the solid matter contained in the liquid is simultaneously directed towards the outer circumference of the liquid vortex and returns to the lower part of the first clarification chamber 1 by the influence of gravity. With said arrangement, a reduction in the amount of impurities in the liquid arriving to the outlet 12 of the upper part of the first clarification chamber 1 is achieved, particularly when the outlet 12 is arranged near the inner part of the liquid vortex containing liquid of higher purity.

In the liquid processing device of the example of Figure 1, filtering material 15 is provided to the second clarification chamber 14 for filtering the liquid to be received from the outlet 12 and for thus obtaining purified liquid. Said filtering material 15 is thereby formed of a porous mass or mass consisting of separate pieces, which allows the pre-cleaned liquid received from the outlet 12 to pass through the filtering material 15. The filtering material 15 may be selected according to the properties of the liquid to be processed, and in some embodiments of the liquid processing device, it may comprise, for example, anthracite. The operation of the filtering material 15 may be based, for example, on physical or chemical adsorption, whereby particulates and molecules contained in the liquid to be filtered may adhere, condense or stick to the filtering material 15. In the liquid processing device according to the example of Figure 1, a second biofilm is additionally arranged to the filtering material 15, which may comprise, for example, microbial growth similar to or different from the first biofilm. With said second biofilm, the removal of the matter contained in the liquid to be filtered can be further increased. In said example, the passing of the liquid through the filtering material 15 takes place gravitationally, but in some embodiments of the liquid processing device, it may also include transfer of the liquid through the filtering material 15 by mechanical means.

In the example of Figure 1, the liquid processing device further comprises a discharge member 16, which in a processing function is arranged to feed liquid passed through the filtering material 15 out from the liquid processing device. In this context, the processing function refers to the normal operating mode of the liquid processing device as disclosed above for processing the liquid. In said example, the discharge member 16 is arranged into connection with the clean chamber 22, whereby the purified liquid passed to the clean chamber 22 through the filtering material 15 is guided via the discharge member 16 away from the liquid processing device by the influence of pressure on the liquid in the clean chamber 22. In the liquid processing device according to said example, the discharge member 16 may also be set to work in a rinsing function, wherein the discharge member 16 is arranged to feed liquid through the filtering material 15 in a reversed direction compared to the filtering direction, so as to rinse the filtering material 15. In this case, the outlet member 16, which comprises a channel for receiving the liquid passed through the filtering material 15, is connected to an apparatus for reversing the flow direction of the liquid as compared to the processing function, such that the liquid fed through the filtering material 15 in the rinsing function is purified liquid already filtered by the filtering material 15.

In the example of Figure 1, also an outlet 17 is provided for the liquid fed through the filtering material 15 in the rinsing function for removing the rinsing liquid. In the example of Figure 1, said outlet 17 comprises a vertical channel leading from the upper part of the second clarification chamber 14 to the outside of the liquid processing device, wherein the outlet is arranged to receive the rinsing liquid as an overflow when the liquid level rises to the upper part of the second clarification chamber 14 during the rinsing function. In said example, restriction members 20 are furthermore provided to the upper part of the second clarification chamber 14, so as to restrict passage of impurities of the rinsing liquid to the first clarification chamber 1. In the example, the restriction members 20 comprise a grille with toothed edges, such that impurities in the rinsing liquid, such as matter released from the filtering material 15 into the rinsing liquid, cannot pass the grille. With the rinsing function as described, the filtering material 15 may be cleansed from, for example, matter attached to it from the liquid to be filtered, as well as from excess second biofilm, and it is possible to repeat the rinsing function, for example, at regular intervals to maintain and enhance the operation of the liquid processing device.

In the example of Figure 1, the first clarification chamber 1 is formed to be fluid-tight, wherein the processing of the liquid takes place inside the first clarification chamber 1 in a space closed from the surroundings of the liquid purification device. In said example, the liquid processing device additionally comprises a coupling 21 for a pressure difference source for arranging a pressure within the first clarification chamber 1. Thereby, the pressure difference source in question may be, for example, a vacuum source external to the liquid processing device. The internal pressure of the first clarification chamber 1 may then be set lower than the pressure outside the liquid processing device, which enables easier capture of gases evaporating from the liquid during the liquid processing and prevention of possible gas leaks from spreading to the surrounding of the liquid processing device. In order to achieve said advantages, the internal pressure of the first clarification chamber 1 may be set to, for example, approximately 200 Pa.

It is to be understood that the above description and the accompanying figures are only intended to illustrate the present invention. It will be obvious to a person skilled in the art that the invention can be varied and modified without departing from the scope of the invention.

## Claims

1. A liquid processing device comprising:
a first clarification chamber (1), and
an inlet (2) for a liquid to be processed, **characterized in that** the liquid processing device further comprises:
an inlet chamber (3) comprising a conical part (4) that tapers downwards and has discontinuity locations (5) comprised on its inner surface,
a sludge chamber (6) arranged below the inlet chamber (3) for receiving matter that is gravitationally separated in the inlet chamber (3), and
a flow connection (7) to the first clarification chamber (1) arranged to an upper part of the inlet chamber (3),
wherein the inlet (2) is directed towards the discontinuity locations (5) of the inner surface of the conical part (4) to feed the liquid to be processed with pressure against the discontinuity locations (5) to produce a vortex of liquid in the conical part (4), and
the discontinuity locations (5) are produced as corners 9 formed by walls 8 of the conical part of the inlet chamber.

2. The liquid processing device according to claim 1, **characterized in that** walls (8) of the conical part (4) of the inlet chamber (3) form together corners (9) so as to provide the discontinuity locations (5), wherein the number of the corners (9) is 5 to 8.

3. The liquid processing device according to claim 1 or 2, **characterized in that** the inlet (2) is arranged to feed the liquid to be processed against the discontinuity locations (5) of the inner surface with an incoming angle (a) of 15° to 60°.

4. The liquid processing device according to claims 2 and 3, **characterized in that** the number of the corners (9) formed by the walls (8) of the conical part (4) of the inlet chamber (3) is 6, and
the inlet (2) is arranged to feed the liquid to be processed against the discontinuity locations (5) of the inner surface with an incoming angle (a) of 25° to 30°.

5. The liquid processing device according to any one of the claims 1 to 4, **characterized in that** the inlet (2) is arranged to feed the liquid to be processed against the discontinuity locations (5) of the inner surface of the inlet chamber (3) with a pressure of 2 to 3 bar.

6. The liquid processing device according to any one of the claims 1 to 5, **characterized in that**
the flow connection (7) from the inlet chamber (3) to the first clarification chamber (1) opens to a lower part of the first clarification chamber (1),
the first clarification chamber (1) is provided with carrier material (10),
the first clarification chamber (1) is provided with a nozzle apparatus (11) for feeding liquid to the first clarification chamber (1), so as to generate spinning motion to the liquid and the carrier material (10) inside the first clarification chamber (1) for bringing them into contact with each other,
an upper part of the first clarification chamber (1) is provided with an outlet (12) for removing liquid from the first clarification chamber (1), and
the lower part of the first clarification chamber (1) is provided with an outlet (13) to the sludge chamber (6) for removing material accumulating to the lower part.

7. The liquid processing device according to claim 6, **characterized in that**
the inlet chamber (3) is arranged to a second clarification chamber (14) inside the first clarification chamber (1), and that
the second clarification chamber (14) is provided with filtering material (15) for filtering liquid to be received from the outlet (12) provided to the upper part of the first clarification chamber (1).

8. The liquid processing device according to claim 7, **characterized in that**
the liquid processing device further comprises a discharge member (16),
which in a processing function is arranged to feed liquid passed through the filtering material (15) out from the liquid processing device, and
which in a rinsing function is arranged to feed liquid through the filtering material (15) in a reversed direction compared to the filtering direction, so as to rinse the filtering material (15), and
that an outlet (17) is provided for the liquid passed through the filtering material (15) in the rinsing function for removing the rinsing liquid.

9. The liquid processing device according to claim 7 or 8, **characterized in that** side walls of the first clarification chamber (1) are formed into a cylindrical shape from their inner side, and
that side walls of the second clarification chamber (14) are formed at their lower portion from the outside into a cone tapering downwards,
wherein the spinning motion of the liquid in the first clarification chamber (1) is arranged to advance upwards through a decreasing area, so as to increase the velocity of the upwardly directed liquid flow.

10. The liquid processing device according to any one of the claims 7 to 9, **characterized in that** the inlet chamber (3) is arranged to a lower part of the second clarification chamber (14) and coaxially with respect to it,
wherein the inlet chamber (3) is separated from an inner side of the second clarification chamber (14) with a liquid-tight partitioning wall (18).

11. The liquid processing device according to any one of the claims 7 to 10, **characterized in that** an upper part of the second clarification chamber (14) is provided with separator members (19) for separating the carrier material (10) from the liquid to be received from the outlet (12) of the upper part of the first clarification chamber (1).

12. The liquid processing device according to claim 8, **characterized in that** an upper part of the second clarification chamber (14) is provided with restriction members (20) for restricting passage of impurities of the rinsing liquid to the first clarification chamber (1).

13. The liquid processing device according to any one of the claims 7 to 12, **characterized in that** the filtering material (15) comprises anthracite, and
that the carrier material (10) comprises granules, pellets or plastic bodies.

14. The liquid processing device according to any one of the claims 1 to 13, **characterized in that** the first clarification chamber (1) is formed to be fluid-tight, and
that the liquid processing device comprises a coupling (21) for a pressure difference source for arranging a pressure within the first clarification chamber (1), which pressure is lower than the pressure outside the liquid processing device.

15. A method for processing a liquid with a liquid processing device, **characterized in that** the method comprises:
feeding liquid to be processed into an inlet chamber (3),
bringing liquid to be processed against discontinuity locations (5) of an inner surface of the inlet chamber (3) with pressure, so as to achieve a vortex of liquid,
receiving gravitationally separated matter from below the vortex of liquid to obtain separated liquid,
feeding separated liquid into contact with a carrier material (10) to obtain pre-purified liquid,
feeding pre-purified liquid into contact with a filtering material (15) to obtain purified liquid.
